(19) Europäisches Patentamt
European Patent Office
Office européen des brevets

(11) EP 2 271 129 A1

(12) EUROPEAN PATENT APPLICATION

(43) Date of publication:
05.01.2011 Bulletin 2011/01

(51) Int Cl.:
H04R 1/28 (2006.01)  H04R 19/00 (2006.01)
G01S 15/04 (2006.01)

(21) Application number: 09164440.1

(22) Date of filing: 02.07.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicants:
• NXP B.V.
5656 AG Eindhoven (NL)
• Koninklijke Philips Electronics N.V.
5621 AE Eindhoven (NL)

(72) Inventors:
• Goossens, Martijn
5656 AE Eindhoven (NL)
• Langereis, Geert
5656 AE Eindhoven (NL)
• Dirksen, Peter
5656 AE Eindhoven (NL)

(74) Representative: Williamson, Paul Lewis
NXP Semiconductors
IP Department
Betchworth House
57-65 Station Road
Redhill
Surrey RH1 1DL (GB)

Remarks:
Amended claims in accordance with Rule 137(2)
EPC.

(54) **Transducer with resonant cavity**

(57) A transducer such as a microphone or a micro-electrical-mechanical-system (MEMS) microphone comprises a back chamber which is dimensioned as a resonance cavity so as to effectively emit or receive ultrasound.

**Fig. 3**

## Description

FIELD OF THE INVENTION

The present invention generally relates to transducers and electro-acoustic transducers such as microphones, etc.

BACKGROUND OF THE INVENTION

Generally, miniature silicon condenser microphones such as capacitive, micro-electrical mechanical system (MEMS) microphones can be integrated e.g. with CMOS circuitry and can be produced by batch processing which makes the device to device variation much smaller. Further, miniature silicon condenser microphones have a form factor compatible with state-of-the-art hand held device architectures, and do not need an electret for electrical biasing which makes them easier to solder onto a printed circuit board (PCB) than conventional electret microphones.

However, it is difficult to achieve high sensitivity and low noise with very small volumes. Further, the usage of such microphones for other purposes is limited.

SUMMARY OF THE INVENTION

It is an objective of the presented invention to provide a transducer such as a microphone with improved functionality.

In accordance with one or more of the embodiments an electro-acoustic transducer is provided which comprises a moveable membrane and a back chamber. The back chamber is configured as a resonance cavity providing resonance at the resonance frequency of the membrane.

Optionally, the resonance cavity is arranged in a mounting plate supporting at least one of a substrate and the membrane. Therefore, precise mounting is possible using suitable strong or economic material for the mounting plate.

Optionally, the membrane is arranged at the border of the resonance cavity, allowing compact structure and precise dimensioning.

In accordance with one or more of the embodiments the minimum depth d of the back chamber is ¼ wavelength of the resonance wavelength so as to enable resonance.

Optionally the depth d of the back chamber is $d=\frac{1}{4}*\lambda+n*\lambda/2$, where $\lambda$ is the resonance wavelength, and n is an integer, optionally 1 or 2, providing an efficient and compact resonance chamber.

A fixed part may be arranged opposed to the membrane so as to form a capacitor plate. The fixed part and the membrane thus may form a capacitor for sensing e.g. sound or ultrasound or generating ultrasound.

Optionally, a volume of the back chamber is larger than $a^3$ mm$^3$, with a the diameter of the membrane.

The transducer may be configured to at least one of generating and receiving ultrasound at the resonance frequency, e.g. in the 50kHz-10MHz range, or 80-200 kHz range, or around 100 kHz.

Optionally, the transducer is a microphone, a micro-electrical-mechanical-system microphone, or a sensor.

The transducer may e.g. be configured for an ultrasound application comprising emitting an ultrasonic burst, sensing a subsequent ultrasound reflection, and measuring a time delay or damping of the sensed ultrasound. In one or more embodiments, one and the same transducer is configured for sending and receiving the ultrasound signals. In another embodiment, one or more sending transducers and one or more receiving transducers different from the sending transducers may be provided. In such an embodiment, the ultrasonic burst may be sent by one transducer and received by another transducer. The transducer or transducers such as the common sending/receiving transducer, the sending transducer or the receiving transducer (or some or all of these transducers) may comprise or consist of an array of transducers.

DETAILED DESCRIPTION OF THE INVENTION

The present invention is further elucidated by the following figures and examples, which are not intended to limit the scope of the invention. The person skilled in the art will understand that various embodiments may be combined.

BRIEF DESCRIPTION OF THE DRAWINGS

These and other aspects of the invention will be apparent from and elucidated with reference to the embodiment(s) described hereinafter.

DETAILED DESCRIPTION OF THE DRAWINGS

These and other aspects of the invention will become apparent from the exemplary embodiments described hereinafter and illustrated in the drawings.

Fig. 1 shows a basic diagram illustrating an example of a capacitive sensor of MEMS type in accordance with an exemplary implementation the invention,
Fig. 2 shows schematically examples of different implementations of an embodiment of a sensor in accordance with an exemplary implementation the invention, and
Fig. 3 shows an embodiment of a sensor or microphone with a resonance cavity in accordance with the invention.

DETAILED DESCRIPTION OF EMBODIMENTS

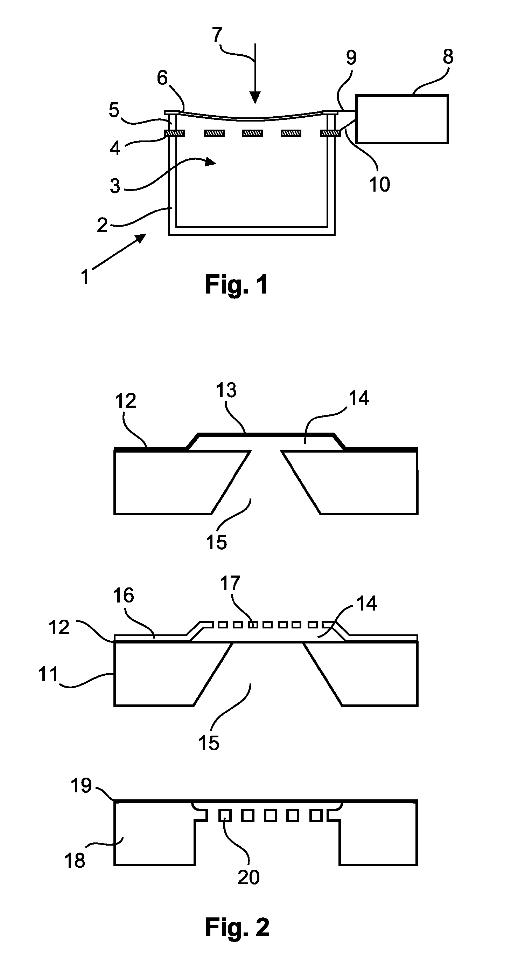

Fig. 1 shows a basic circuit diagram of a capacitive transducer system in accordance with an embodiment which provides a microphone function such as a capacitive microphone, and an ultrasonic function. The system of Fig. 1 comprises a condenser microphone system 1 which has a closed casing 2, a back chamber 3 located in the casing 2, a fixed, perforated back plate 4, a highly compliant, moveable membrane (diaphragm) 6 arranged essentially parallel to the back plate 4 with an air gap 5 in between, and a controller 8 connected to the membrane 6 and back plate 4 via electric lines 9, 10 for applying at least one of a bias voltage and an excitation voltage for producing ultrasonic vibrations. The controller 8 may comprise a voltage bias source, optionally a buffer amplifier for buffering received or evaluated signals, a processor providing a signal processing functions such as evaluation or generation function, and a frequency generator for generating an ultrasonic frequency for emitting ultrasound when applied to the microphone. The back plate 4 and the membrane 6 form the two plates of a variable air-gap capacitor. Sound or ultrasound signals such as pressure may act on the membrane 6 along an arrow 7, and may be transmitted in the opposite direction.

The membrane 6 is highly compliant and precisely positioned relative to the back plate 4, while the back plate 4 remains stationary and presents a minimum of resistance to the flow of air through it. The microphone may have a dimension below 1 mm in size using integrated circuit materials. Typical stress levels in integrated circuit thin films may be relieved in the finished diaphragm or membrane.

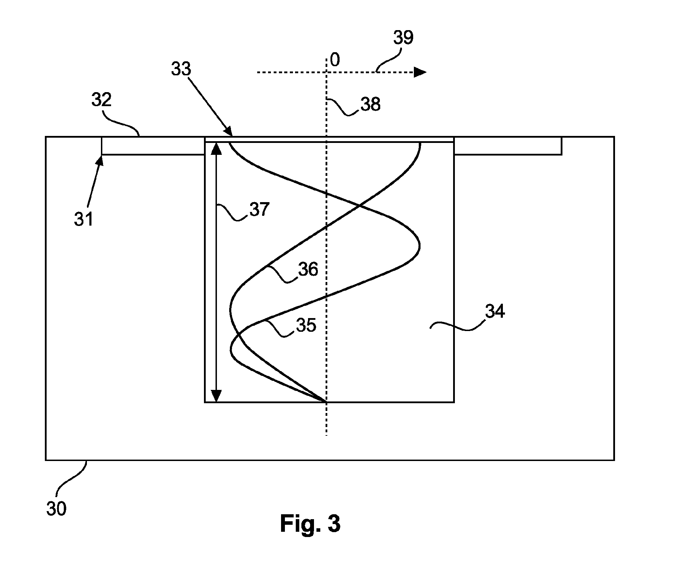

Fig. 2 shows a basic structure of three possible implementations on a silicon wafer 11 or 18. The back chamber shown in Fig. 1 or 3 may optionally be added to the embodiment of Fig. 2, as illustrated in Fig. 1 or 3, and may be implemented in the chip-package or on the wafer 11, 18. The wafer 11 comprises an open pyramid-shaped hollow space 15 which extends from the wafer bottom to the top thereof and opens at the back side of membrane 12 overlying the wafer 11.

In Fig. 2, upper part, the membrane 12 comprises an elevated part 13 acting as moveable diaphragm and providing a chamber 14 which is open to the space 15. In Fig. 2, middle part, the membrane 12 is arranged between the space 15 and an upper layer 16 having an elevated middle part 17 in form of a fixed, perforated back plate providing an internal chamber 14 which is open to the outside or a back chamber. In Fig. 2, lower part, membrane 19 is arranged on top of the wafer 18 wherein a perforated stiff back plate 20 is integrally formed with the wafer 18 forming a back chamber of rectangular cross section.

In accordance with one or more embodiments a capacitive microphone is used as an ultrasound transducer. With such a microphone ultrasound waves in the 50kHz-100kHz range can easily and effectively be generated. Further, the Q-factor of the microphone can be improved by means of a resonant cavity which increases the Q-factor, as exemplified below.

In operation of the microphone, an acoustic signal results in a change of the distance between the top and bottom electrodes 23, 27, indicated by $\Delta d$. $\Delta d$ is not necessarily as large as indicated in the drawing, and may also be smaller or even much smaller. In other embodiments the transducer may also be operated in pull-in mode. $\Delta d$ is then zero in the centre and non-zero in the area around it.

Capacitive medical ultrasound transducers may be operated by applying a direct current (DC) bias voltage less than the collapse voltage of the membrane, so that the membrane is deflected toward the bottom electrode. In the non-collapsed mode, there is no contact between the membrane and the substrate so that the maximum displacement occurs at the center of the membrane.

In accordance with one or more embodiments, the microphone may also act as an electrostatic ultrasonic transducer or ultrasonic sender and/or receiver, and may be formed on a semiconductor substrate by micro-machining. The substrate and membrane define the electrodes of the transducer.

The membrane may form a top electrode and extend to an electrical connection area for contact with a control or measurement section for controlling, exciting and/or detecting the electrical power such as voltage and/or current occurring between the top electrode and bottom electrode. The bottom electrode 23 extends to electrical connection area 24 for contact with the control and/or measurement section.

Some of the embodiments of the transducer may have dimensions in the 50-40000$\mu$m range, and may be used for generating ultrasonic waves such as ultrasonic sound bursts.

In accordance with one or more of the embodiments, the microphone is provided with a resonant cavity for improved performance

In accordance with one or more of the embodiments the audio MEMS microphone produces ultrasound, i.e. sound of a frequency of 50 to 500kHz, or about 80 to 200 kHz, or about 100 kHz.

In accordance with one or more of the embodiments a resonance cavity is added below the MEMS microphone which increases the ultrasound level significantly.

In accordance with one or more of the embodiments the acoustical back-chamber of the MEMS microphone may be sized such that it matches the resonance frequency of the MEMS membrane. This is achieved by choosing the length of the back-chamber equal to a certain fraction of the acoustical wavelength of the microphone at resonance.

For the performance of the microphone in the audible range this sizing of the back chamber does not have any influence while the performance in the ultrasonic domain is significantly improved. As an example, the send and receive sensitivity in the ultrasonic domain is increased by at least a factor of 2.

There are several applications for which it is advantageous to use microphones such as MEMS microphones not just in the audible range but also in the ultrasonic range, in particular at its resonance frequency. In accordance with one or more of the embodiments the microphone may be used to send and receive ultrasound. By measuring the time delay between sensing an ultrasonic burst and measuring the reflected signal, a distance detection can be done. This can be implemented either with a single microphone, or with a microphone array with which beam steering can be established.

The MEMS microphone may be operated at its resonance frequency, and may be used as an actuator or as a sensor. It is possible to improve the quality factor without deteriorating the performance in the audible range so that the microphone may also be used as a regular microphone for speech. In other cases the device can be fully optimized to operate at resonance because its function is dedicated to the ultrasonic range.

In accordance with one or more of the embodiments the depth of the e.g. MEMS microphone back chamber is dimensioned to precisely match a well-chosen fraction of the ultrasonic wavelength at resonance such that a standing wave is created in the back chamber when the device is operated at resonance. At the bottom of the back chamber the pressure wave should have a node, while at the moving membrane the pressure wave should have a crest. The minimum back chamber depth is therefore ¼ resonance wavelength, and in general the depth should be

$$d = ¼ * \lambda + n * \lambda / 2,$$

where $\lambda$ is the wavelength at resonance, and n is an integer.

Fig. 3 illustrates an embodiment of an electroacoustic transducer such as a microphone, optionally MEMS microphone. The transducer comprises a mounting plate 30 with resonance cavity 34 which is provided by a back chamber as shown. The mounting plate 30 comprises an alignment cavity 31 in the mounting plate 30 to accommodate a substrate 32 made e.g. of wafer material such as silicon, in such a manner that the upper substrate surface is aligned with the upper surface of the mounting plate 30. The substrate 32 is connected to or integrally formed with a membrane 33 serving as a MEMS microphone membrane and being arranged such that the upper membrane surface is aligned with the upper surface of the substrate 32. The membrane 33 surfaces are arranged parallel to each other and to the bottom of the cavity 34. A back plate may be provided e.g. in the manner as shown in Fig. 2, middle or lower part, for example as an intermediate mesh or perforated grid (20 in Fig. 2) or as upper layer (16 in Fig. 2) having an elevated middle part in form of a fixed, perforated back plate forming an air gap (14 in Fig. 2) to the membrane 33. Further, a controller such as controller 8 of Fig. 1 may be connected to the membrane 33 and to the back plate for sensing and generating respective signals in a manner as e.g. shown in Fig. 1.

Lines 35, 36 indicate standing pressure waves inside the cavity 34. An arrow 37 indicates the depth of the resonance cavity 34, i.e. the distance between the bottom of the cavity 34 and the parallel top thereof which corresponds to the bottom surface of membrane 33. In an example embodiment, the depth 37 corresponds to ¾ $\lambda$ or 5/4 $\lambda$, the resonance wavelength.

The broken line 39 indicates the axis for the pressure waves 35,36 as a function of position in the cavity 34. The broken line 38 illustrates axis for the position in the cavity 34 and the center line of the cavity 34.

The wavelength $\lambda$ is determined by the resonance frequency of the membrane 33. For a membrane of which the performance is determined by the stress in the material (a "drum-type" membrane), the resonance frequency is given by:

$$f_{res} = \frac{1}{2\pi\sqrt{c\frac{\rho_d a_d^2}{\sigma_d}}} \, ,$$

with $\rho_d$ the density of the membrane material, $\sigma_d$ the intrinsic stress of the membrane, $a_d$ the diameter of the membrane and c a geometrical constant taking the deflection profile and the membrane shape into account. In this formula, the acoustic radiation, the air-flows in the air-gap and acoustic holes, the back-chamber finite volume and the movement of the back plate are not taken into account. Nevertheless, MEMS microphones are designed such that these influences are relatively small.

For the case where the MEMS microphone performance in the audible range should not be affected, the volume of the back chamber should be larger than $a^3$ mm$^3$, with a the diameter of the membrane. In such a case, the smallest possible depth that gives a cavity resonance that matches the membrane resonance frequency is ¾ wavelength. In an example embodiment, the dimension of the microphone comprises a diameter of 1 mm, and a membrane resonance around 100 kHz. Therefore, the back chamber should be at least 1mm$^3$ and so n≥1 and the depth equal to

$$d = ¼ * \lambda + 1 * \lambda/2 = 2.48mm.$$

In the embodiment schematically illustrated in Fig. 3, the MEMS microphone is mounted on the mounting plate 30 with the resonance cavity 34 and the alignment cavity 31. The size of the alignment cavity 31 matches the lateral dimensions of the MEMS microphone and is positioned with respect to the resonance cavity 34 such that the resonance cavity falls precisely below the MEMS membrane.

In one embodiment the depth of the resonance cavity 34 is equal to ¾ fraction of the wavelength at the resonance frequency of the MEMS microphone membrane 33.

In accordance with one or more of the embodiments it is possible to use the MEMS microphone as sensor and as actuator at the ultrasonic resonance frequency. If desired the device can also be used as a microphone in the audible range.

A MEMS microphone is a cheaper device as compared to piezo transducers for ultrasound. The re-use of a microphone for ultrasound opens many applications.

In accordance with one or more of the embodiments the MEMS microphone may be used for various ultrasound applications, such as distance sensing in a mobile phone or other devices that make use of a MEMS microphone.

In addition, mobile phones and other handheld devices may be equipped so as to anticipate the activities of the user, e.g. for rotating the displayed content when the device is being rotated, or for power saving mechanisms. As an example, a phone which is next to the user's ear does not have to have a powered display. In view of that, it is essential to detect the actual usage of the phone. Four user scenario's can be that the phone is in display mode, it is next to the ear for a phone call, it is on the table in a hands-free mode or it is stand-by in a pocket.

One possibility is to use a MEMS microphone as a proximity sensor to measure some of the clues for the user scenario. The proximity sensor may detect an object (human head, table-top) in front of the user interface of the phone. An additional gravitational force sensor (accelerometer) may be provided for detecting the horizontal or vertical position of the phone. The microphone according to one or more embodiments may detect whether the phone is next to the ear or is held in front of a face to watch the display. Such a sensor is provided at low costs, and may be implemented to be able to distinguish between types of surfaces, for example the difference between a table top of a human skin.

The microphone may e.g. be a microphone used for mobile phone customers. Every electronic equipment having a microphone can benefit from the added functionality of ultrasound generation such as distance detection, for example MP3 players with recording functionality, DVD-player, computer monitor, PDA, laptop, USB memory stick, digital camera, etc. As a further example, a computer monitor may have four microphones with distance detection on the corners. This gives the possibility to implement the angular detection of the presence of a person and may acoustically focus towards this person like conference phones.

Another example is the integration of such microphones in the dashboard of a car. The position of a driver and/or co-driver can be detected and the microphone array can be used to implement angular sensitive voice recording. This is an advantage to reduce background noise. The ultrasonic detection of the body of the driver enables a more focused beam steering than when using conventional microphones. Further, medical ultrasound transducers or consumer applications like home automation and security may be equipped with one or more microphones in accordance with one or more of the embodiments.

The characteristic frequency response of a MEMS microphone may have an approximately flat response in the audible range and a resonance outside the audible range. This resonance is determined by the effective mass of the microphone membrane and the effective spring constant ("compliance") of the membrane. The damping at resonance is determined by the acoustic holes and the air gap size. In MEMS microphones, the resonance peak may be between 50kHz and 150kHz, which coincides with the optimum frequency range for ultrasound propagation in air.

In accordance with one or more of the embodiments this resonance frequency may be used for an ultrasound application where an ultrasonic burst is emitted and the reflection is sensed afterwards. The time delay is an indication for the acoustic time of flight, which is an indication for the distance to the nearest object. This measurement may be done with the same device or a MEMS microphone which is already available in the mobile phone as a speech recording device.

A MEMS microphone optimized for speech (typically having a resonance at 110kHz) may effectively emit and sense an ultrasound wave. Any method of emitting ultrasound using a resonant device may be used, and also any method of measuring a distance using ultrasound may be employed. Embodiments may reuse a MEMS microphone device as an ultrasound transducer.

In principle, from the change in amplitude (taking the measured distance into account), an indication for the surface of the object can be estimated. For example, an acoustic wave reflected by a human skin will be damped much more than a wave reflected by a hard material.

Advantageously, no additional hardware needed to implement a proximity sensor in a mobile phone or other hand-held sound recording device.

The MEMS microphone technology also enables lower resonance frequencies (<100kHz) than those of existing ultrasound devices (CMUT and PMUT) where it is above 100kHz. The low resonance frequency of MEMS microphones may be designed by the high compliant membrane suspended over a through-wafer hole.

In an example embodiment the transducer may be excited, e.g. by controller 8 of Fig. 1, with its resonance frequency in the 100kHz-10MHz range so as to emit the ultrasound. The echoed wave can be sensed by the same device and the time delay and/or extinction may be evaluated as a measure for materials and material topology in the neighbourhood.

Arrays of such devices may be used to create beam steering functions. In addition, in common applications the capacitive device may be used as an actuator or sensor.

One or more embodiments of the MEMS microphone may have a size of 500-1000$\mu$m. An additional advantage is that the overall resonance frequency can be increased from tens of kHz range to the hundreds of kHz (or even MHz) range which increases the total harmonic distortion of the device.

Embodiments provide increased signal to noise ratio and allow a robust configuration with respect to a MEMS microphone. Further, the fabrication process is simplified and faster.

Embodiments may be implemented e.g. as microphone devices or the like.

Other variations to the disclosed embodiments can be understood and effected by those skilled in the art in practicing the claimed invention, from a study of the drawings, the disclosure, and the appended claims.

A single unit or devices may fulfill the functions of several items recited in the description or claims. Measures and features mentioned in the description and claims can be arbitrarily combined.

Each of the features recited above or shown in the drawings or disclosed above in separate embodiments or dependent claims may be advantageously combined with one, two or more of the other features in any arbitrary combination.

While the invention has been illustrated and described in detail in the drawings and foregoing description, such illustration and description are to be considered illustrative or exemplary and not restrictive. The invention is not limited to the disclosed embodiments. For example, it is possible to operate the invention in an embodiment for measuring other signals or parameters.

Other variations to the disclosed embodiments can be understood and effected by those skilled in the art in practicing the claimed invention, from a study of the drawings, the disclosure, and the appended claims. A computer program may be stored or distributed on a suitable medium, such as an optical storage medium or a solid-state medium, optionally supplied together with or as part of other hardware, and may also be distributed in other forms, such as via the Internet or other wired or wireless telecommunication systems.

In the claims, the word "comprising" does not exclude other elements or steps, and the indefinite article "a" or "an" does not exclude a plurality. A single device or other unit may fulfill the functions of several items recited in the description, drawings or claims. The mere fact that certain measures are recited in mutually different dependent claims does not indicate that a combination of these measured cannot be used to advantage.

Any reference signs in the claims should not be construed as limiting the scope.

The excitation and measurement processes, steps, and determinations can be performed by one or several units or devices. For example, the control and measurement can be performed by a single unit of by any other number of different units. The calculations and determinations and/or the control of the system and/or of the device in accordance with the above described features can be implemented as program code means of a computer program and/or as dedicated hardware.

## Claims

1. Electro-acoustic transducer,
   comprising a moveable membrane and a back chamber, wherein the back chamber is configured as a resonance cavity providing resonance at the resonance frequency of the membrane.

2. Transducer according to claim 1,
   wherein the resonance cavity is arranged in a mounting plate supporting at least one of a substrate and the membrane.

3. Transducer according to claim 1 or 2,
   wherein the membrane is arranged at the border of the resonance cavity.

4. Transducer according to any one of the preceding claims,
   wherein a minimum depth d of the back chamber is ¼ acoustical wavelength $\lambda$ at resonance of the membrane.

5. Transducer according to any one of the preceding claims,
   wherein depth d of the back chamber is d=¼*$\lambda$+n*$\lambda$/2, where $\lambda$ is the acoustical resonance wavelength of the membrane, and n is an integer.

6. Transducer according to claim 5,
   wherein n is 1 or 2.

7. Transducer according to any one of the preceding claims, comprising a fixed part arranged opposed to the membrane and forming a plate of a capacitor.

8. Transducer according to any one of the preceding claims wherein a volume of the back chamber is larger than a$^3$ mm$^3$, with a the diameter of the membrane.

9. Transducer according to any one of the preceding claims, wherein the transducer is configured to at least one of generating and receiving ultrasound at the resonance frequency.

10. Transducer according to any one of the preceding claims wherein the resonance frequency is in the 50kHz-10MHz range, or 80-200 kHz, or around 100 kHz.

11. Transducer according to any one of the preceding claims wherein the transducer is a microphone, a micro-electrical-mechanical-system microphone, or a sensor.

12. Transducer according to any one of the preceding claims wherein the transducer is configured for an ultrasound application comprising emitting an ultrasonic burst, sensing a subsequent ultrasound reflection, and measuring a time delay or damping of the sensed ultrasound.

**Amended claims in accordance with Rule 137(2) EPC.**

1. An electro-acoustic transducer comprising:

a mounting plate (30) having an alignment cavity (31) and a back chamber (3); and
a substrate (32) having a moveable membrane (33),

wherein the alignment cavity support the substrate such that the moveable membrane is aligned with the back chamber, and
wherein the back chamber is configured as a resonance cavity (34) for providing resonance at a resonance frequency of the moveable membrane.

2. An electro-acoustic transducer according to claim 1, wherein the membrane is arranged at the border of the resonance cavity.

3. An electro-acoustic transducer according to any one of the preceding claims, wherein a minimum depth d of the back chamber is ¼ acoustical wavelength $\lambda$ at resonance of the membrane.

4. As electro-acoustic transducer according to any one of the preceding claims, wherein depth d of the back chamber is $d = ¼ * \lambda + n * \lambda / 2$, where $\lambda$ is the acoustical resonance wavelength of the membrane, and n is an integer.

5. An electro-acoustic transducer according to claim 5, wherein n is 1 or 2.

6. An electro-acoustic transducer according to anyone of the preceding claims, comprising a fixed part arranged opposed to the membrane and forming a plate of a capacitor.

7. An dectro-acoustic transducer according to any one of the preceding claims wherein a volume of the back chamber is larger than $a^3$ mm$^3$, with a the diameter of the membrane.

8. An electro-acoustic transducer according to any one of the preceding claims, wherein the transducer is configured to at least one of generating and receiving ultrasound at the resonance frequency.

9. An electro-acoustic transducer according to any one of the preceding claims wherein the resonance frequency is in the 50kHz-10MHz range, or 80-200 kHz, or around 100 kHz.

10. An electro-acoustic transducer according to any one of the preceding claims wherein the transducer is a microphone, a micro-electrical-mechanical-system microphone, or a sensor.

11. An electro-acoustic transducer according to any one of the preceding claims wherein the transducer is configured for an ultrasound application comprising emitting an ultrasonic burst, sensing a subsequent ultrasound reflection, and measuring a time delay or damping of the sensed ultrasound.

**Fig. 1**

**Fig. 2**

**Fig. 3**

**Europäisches Patentamt**
**European Patent Office**
**Office européen des brevets**

# EUROPEAN SEARCH REPORT

Application Number

EP 09 16 4440

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/113503 A2 (UNIV STRATHCLYDE [GB]; HAYWARD GORDON [GB]; GALBRAITH WALTER [GB]; CAM) 11 October 2007 (2007-10-11) | 1-3,9-12 | INV. H04R1/28 H04R19/00 G01S15/04 |
| Y | * page 2, line 6 - page 4, line 4; figure 2 * | 4-8 | |
| Y | US 5 303 210 A (BERNSTEIN JONATHAN [US]) 12 April 1994 (1994-04-12) * column 3, line 28 - column 4, line 19; figures 1-4 * | 4-7 | |
| Y | JP 58 172099 A (MIWA NOBUO) 8 October 1983 (1983-10-08) * abstract * | 5-6 | |
| Y | US 2008/298621 A1 (THEUSS HORST [DE] ET AL) 4 December 2008 (2008-12-04) * paragraphs [0049], [0059]; figure 7 * | 8 | |
| A | EP 1 174 732 A2 (NOKIA MOBILE PHONES LTD [FI] NOKIA CORP [FI]) 23 January 2002 (2002-01-23) * the whole document * | 1-12 | TECHNICAL FIELDS SEARCHED (IPC) H04R G01S |

The present search report has been drawn up for all claims

| Place of search | Date of completion of the search | Examiner |
|---|---|---|
| Munich | 4 December 2009 | Borowski, Michael |

EPO FORM 1503 03.82 (P04C01)

**ANNEX TO THE EUROPEAN SEARCH REPORT**

**ON EUROPEAN PATENT APPLICATION NO.**                    EP 09 16 4440

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2009

| Patent document cited in search report | | Publication date | Patent family member(s) | | Publication date |
|---|---|---|---|---|---|
| WO 2007113503 | A2 | 11-10-2007 | NONE | | |
| US 5303210 | A | 12-04-1994 | NONE | | |
| JP 58172099 | A | 08-10-1983 | NONE | | |
| US 2008298621 | A1 | 04-12-2008 | DE 102008007682 A1 | | 11-12-2008 |
| EP 1174732 | A2 | 23-01-2002 | CN 1331552 A | | 16-01-2002 |
| | | | DE 60125874 T2 | | 18-10-2007 |
| | | | JP 2002111852 A | | 12-04-2002 |
| | | | US 6542436 B1 | | 01-04-2003 |

For more details about this annex : see Official Journal of the European Patent Office, No. 12/82